# EUROPEAN PATENT SPECIFICATION

(11) **EP 4 670 143 B1**
(45) Date of publication and mention of the grant of the patent: **04.11.2026**
(21) Application number: 24706409.0
(22) Date of filing: 19.02.2024
(51) Int. Cl.: G07C 9/00, G07C 9/21

(54) **AUTHENTICATING A COMMAND PROVIDED TO AN ELECTRONIC LOCK**
AUTHENTIFIZIERUNG EINES BEFEHLS AN EIN ELEKTRONISCHES SCHLOSS
AUTHENTIFICATION D'UNE INSTRUCTION FOURNIE À UN VERROU ÉLECTRONIQUE

(30) Priority: 20.02.2023 SE 2350196
(43) Date of publication of application: 31.12.2025
(73) Proprietor: Abloy Oy, 80100 Joensuu (FI)
(72) Inventor: OVASKA, Marko, 00630 Helsinki (FI)
(74) Representative: Kransell & Wennborg KB
(86) International application number: PCT/EP2024/054160
(87) International publication number: WO 2024/175543

(56) References cited:
- EP-A1- 3 208 777
- WO-A1-2022/238424
- US-A1- 2018 047 232
- US-A1- 2020 052 905
- US-A1- 2021 319 639

## Description

### TECHNICAL FIELD

The present disclosure relates to the field of electronic locks and in particular to a method, electronic lock, computer program and computer program product for authenticating a command provided to an electronic lock.

### BACKGROUND

Locks and keys are evolving from the traditional pure mechanical locks. These days, electronic locks are becoming increasingly common. For electronic locks, no mechanical key profile is needed for authentication of a user. The electronic locks can e.g. be opened using an electronic key stored on a special carrier (fob, card, etc.) or in a smartphone. The electronic key and electronic lock can e.g. communicate over a wireless interface. Such electronic locks provide a number of benefits, including improved flexibility in management of access rights, audit trails, key management, etc.

Document WO2022238424A1 discloses an electronic lock for controlling access to a restricted physical space and comprising a lock-core software module, document EP3208777A1 discloses a physical access control system and US2020052905A1 teaches methods authenticating a mobile electronic device.

Electronic locks also need to be secure. Any local attacks on the electronic lock should not open up the possibility of an attacker modifying or commanding the electronic lock that causes the electronic lock illegitimately to be set in an unlocked state.

### SUMMARY

One object is to reduce the chance of a local attack to make the electronic lock perform secure actions.
The invention is defined by the independent claims, while preferred embodiments are defined in the dependent claims.

### BRIEF DESCRIPTION OF THE DRAWINGS

Aspects and embodiments are now described, by way of example, with reference to the accompanying drawings, in which:
Fig 1 is a schematic diagram illustrating an environment in which embodiments presented herein can be applied;
Fig 2 is a schematic diagram illustrating components of the electronic lock of Fig 1;
Fig 3 is a schematic diagram illustrating functional architecture of the electronic lock;
Fig 4 is a flow chart illustrating embodiments of methods for controlling access to a restricted physical space; and
Fig 5 shows one example of a computer program product 90 comprising computer readable means.

### DETAILED DESCRIPTION

The aspects of the present disclosure will now be described more fully hereinafter with reference to the accompanying drawings, in which certain embodiments of the invention are shown. These aspects may, however, be embodied in many different forms and should not be construed as limiting; rather, these embodiments are provided by way of example so that this disclosure will be thorough and complete.

Like numbers refer to like elements throughout the description.

Embodiments presented herein provide improved security for electronic locks. More specifically, there is a separation between an authorisation signal giving authorisation to send a command to the electronic lock and the subsequent sending of the command signal comprising a command to perform a secure action in the electronic lock. Both the authorisation signal and the command signal are verified by checking cryptographic signatures against respective public keys.

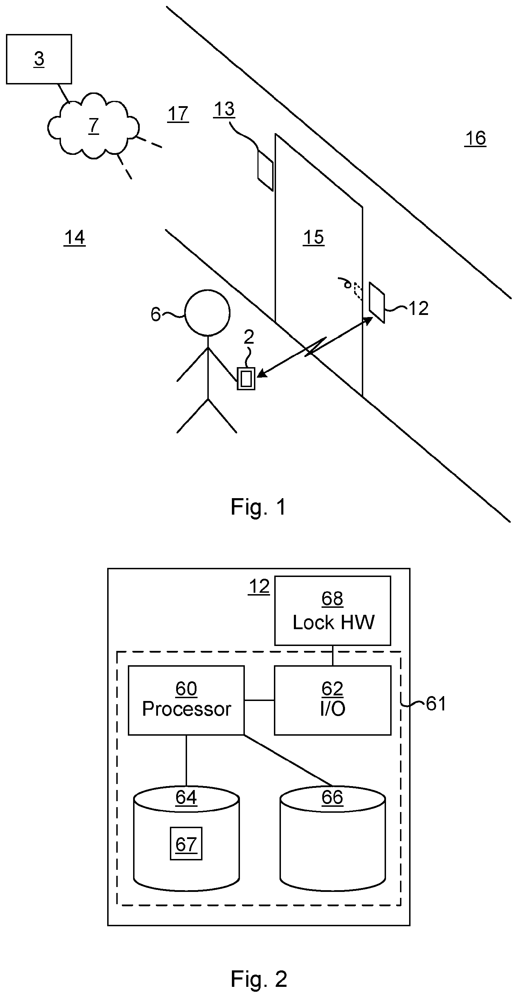

Fig 1 is a schematic diagram illustrating an environment in which embodiments presented herein can be applied. Access to a physical space 16 is restricted by an openable physical barrier 15 which is selectively unlockable. The physical barrier 15 stands between the restricted physical space 16 and an accessible physical space 14. Note that the accessible physical space 14 can be a restricted physical space in itself, but in relation to this physical barrier 15, the accessible physical space 14 is accessible. The barrier 15 can be a door, gate, hatch, cabinet door, drawer, window, etc. An electronic lock 12 is provided in order to control access to the physical space 16, by selectively unlocking the barrier 15.

The electronic lock 12 can be provided in a structure 17 (such as a wall) surrounding the barrier 15 (as shown) or the electronic lock 12 can be provided in the barrier 15 itself (not shown). The electronic lock 12 is controllable to be in a locked state or in an unlocked state.

A user 6 carries an electronic key 2. The electronic key 2 can be in any suitable format that allows an access control device to communicate (wirelessly or conductively) with the electronic lock 12 to evaluate whether to grant access. For instance, the electronic key 2 can be in the form of a key fob, a key card, a hybrid mechanical/electronic key or embedded in a smartphone. Depending on the access rights for the electronic key 2, it can be used to send command signals comprising commands e.g. to unlock the electronic lock 12. It is to be noted that the functionality mentioned for the electronic key 2 can also optionally be provided using a gateway device 13 provided with access to a server 3. The gateway 13 can also communicate over local communication with the electronic lock 12. This allows the server 3 to remotely control the locking/unlocking state of the electronic lock 12. The electronic lock 12 and/or the gateway device 13 can also be used to send other commands than an unlock command, e.g. to update configuration or upgrade software/firmware in the electronic lock 12.

Optionally, the server 3 can communicate with the electronic lock 12, e.g. via the key 2 and/or the gateway 13. The communication between the server 3 and the electronic key 2 or gateway 13 can occur over a network 7, which can be an internet protocol (IP)-based network. The network 7 can e.g. comprise any one or more of a local wireless network, a cellular network, a wired local-area network, a wide-area network (such as the Internet), etc. The server 3 can e.g. support remote unlocking from a server application or from another user device.

As described in more detail below, the electronic lock 12 evaluates whether an entity (e.g. the electronic key 2 or the server 3) is authorised to unlock the electronic lock 12 based on verification of a cryptographic signature against a public key. After the authorisation check, the entity (i.e. the electronic key 2 or the server 3) transmits a command signal comprising a command, such as an unlock trigger command, which causes the electronic lock 12 to perform an action corresponding to the command, e.g. to set the electronic lock 12 in an unlocked state or to apply a configuration (as long as the authorisation and verification of the command signal is successful).

Fig 2 is a schematic diagram illustrating components of the electronic lock 12 of Fig 1. The electronic lock 12 comprises a system-on-chip (SoC) 61 and lock hardware 68. The SoC 61 is a compact implementation of a computer, e.g. on a single circuit-board or even on a single integrated circuit. Optionally, part or all of the lock hardware 68 is provided on the same circuit-board as the SoC 61.

The SoC comprises a processor 60 which is implemented using any combination of one or more of a suitable central processing unit (CPU), graphics processing unit (GPU), multiprocessor, microcontroller, digital signal processor (DSP), etc., capable of executing software instructions 67 stored in a memory 64 of the SoC 61. The processor 60 could alternatively be implemented, partly or completely, using an application specific integrated circuit (ASIC), field programmable gate array (FPGA), etc.

The memory 64 can be any combination of random-access memory (RAM) and/or read-only memory (ROM). The memory 64 also comprises non-transitory persistent storage, which, for example, can be any single one or combination of magnetic memory, optical memory, solid-state memory or even remotely mounted memory.

A data memory 66 is also provided for reading and/or storing data during execution of software instructions in the processor 60. The data memory 66 can e.g. comprise RAM and/or persistent storage. The data memory can be a single memory with different sections for trusted and untrusted environments. Alternatively, there are separate memory circuits for the trusted and untrusted environments of the SoC 61.

The SoC 61 further comprises an I/O interface 62 for communicating with internal entities, such as the lock hardware 68, and external entities such as the electronic key 2 and the gateway device 13. Optionally, the I/O interface 62 also includes a user interface.

The lock hardware 68 can e.g. comprises a motor and/or solenoid for controlling mechanics such that the electronic lock 12 to assume a locked or unlocked state.

Other components of the electronic lock 12 are omitted in order not to obscure the concepts presented herein.

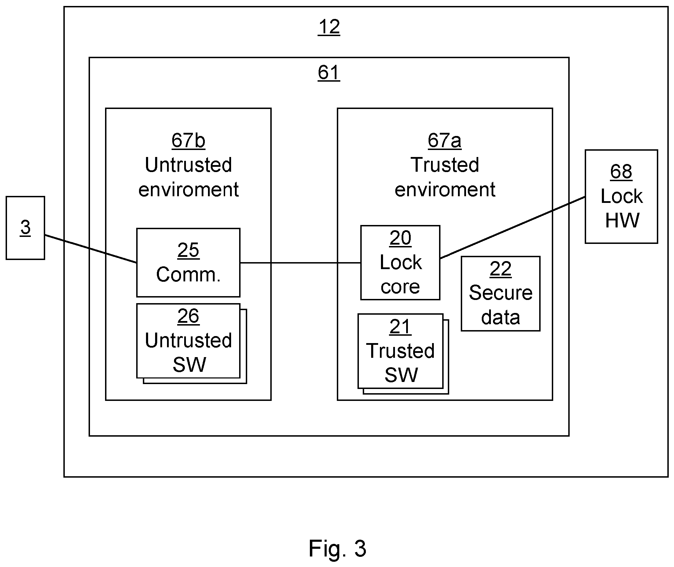

Fig 3 is a schematic diagram illustrating functional architecture of the electronic lock 12. On the SoC 61, there is a trusted environment 67a and an untrusted environment 67b.

The trusted environment 67a comprises a lock-core software module 20 that separately evaluates authorisation and validity of a command signal comrprising a command, such as a trigger unlock command or a configuration command, from the requesting entity (electronic key 2, the gateway device 13 or server 3) as described in more detail below and performs an action, such as controlling the lock hardware 68 or applying a configuration or software upgrade, based on the evaluation. The lock-core software module 20 is in a trusted execution environment of the SoC 61, verified using public key infrastructure (PKI), based on key pairs consisting of a public key and a secret key. In this way, it is the lock-core software module that, in its evaluation of access, authorises the requesting entity and validates the command signal.

The secure data storage 22 can contain (i.e. store) the public keys of cryptographic key pairs for any one or more entities, including for a server 3 that the electronic lock 12 trusts for delegating access rights, the SoC manufacturer (for verifying the initial boot sequence), for the lock manufacturer (for verifying lock software in the boot sequence, and for verifying the lock-core software module 20 and optionally other software in the trusted environment 67a). For instance, the lock-core software module 20 can be configured to only communicate with servers (in end-to-end secure communication) for which a public key is found in the secure data storage 22. This prevents attacks from other entities on the Internet. By storing the public keys as described here, the public keys can be used to verify cryptographic signatures that are generated using a secret key corresponding to the respective public key. In other words, the public keys can be used to verify that certain data is of a trusted source. As described in more detail below, the public keys can thereby be used e.g. to verify if a source of a parameter section in of a command signal is from a trusted party. The parameter section can e.g. comprise configuration parameters (e.g. new public keys of trusted parties or lock owner) or software/firmware for a software/firmware upgrade. It is to be noted that a command for a certain action, such as to apply a configuration, can be verified using a separate public key than the public key that is used for verifying the parameter section.

Optionally, the lock-core software module 20 is installed during production of the electronic lock 12 such that any unauthorized modification of the installed lock-core software module 20 or reconfiguration of the electronic lock 12 results in failed verification of trust in the trusted execution environment. This can be achieved by an electronic signature that is required for any software to be considered to be trusted or for the configuration to be valid, based on a secret key, e.g. associated with the manufacturer or other party deemed to be trusted and for which a public key is installed in the SoC.

The trusted environment 67a also comprises secure data 22 that is unreadable from the untrusted environment 67b. In other words, the secure data 22 is only readable from the trusted environment 67a. The secure data 22 can e.g. comprise secret keys and/or, identity of the SoC 61 and/or the electronic lock 12 and/or public key(s) for verifying signatures of trusted software modules, such as the lock-core software module 20 and for verifying signatures of untrusted software modules 25, 26 in the untrusted environment 67b. The secure data 22 can also contain data of the owner of the electronic lock 12, e.g. in the form of public key of the owner. This structure also allows an update of the lock-core software module (or any other module) to be installed. The updated lock-core software module 20 is then verified using a public key stored in the secure data storage 22. All secure data 22 stored in the trusted environment 67a can be considered to be configuration data. Any change to such secure data 22 should only be allowed when the source of the new configuration data can be confirmed, as detailed below.

The trusted environment 67a further comprises other trusted software 21, which includes low-level components, such as bootloader, for ensuring the proper separation between the trusted environment 67a and untrusted environment 67b, and for verifying that the lock-core software module 20 is a trusted software module. This verification can be based on verification of a cryptographic signature of the lock-core software module 20, applied using secret key e.g. of the manufacturer of the electronic lock 12. The cryptographic signature is verified against a public key (corresponding to the secret key) which is stored in the secure data storage 22.

The trusted environment 67a can be implemented e.g. according to the following. On boot, the SoC vendor initial boot sequence is loaded into the secure area 67a and is executed. This SoC vendor boot sequence is verified against a firmware public key that is stored in the secure data storage 22. The lock then proceeds to a lock boot phase, where any lock boot sequence software is verified against a vendor public key stored in the secure data 22 in the firmware. These public keys are stored in the secure data storage 22, which is accessible only to software in the trusted environment 67a.

The untrusted environment 67b is prevented from bypassing the lock-core software module 20 to control the electronically controllable lock hardware 68. The untrusted environment 67b is not trusted in the trusted execution environment of the SoC. The low-level operating system ensures that only software in the trusted environment 67a is allowed to access address space or other interface components for communicating with the lock hardware 68, and optionally other protected hardware.

The untrusted environment 67b can e.g. comprises communication software 25 implementing communication protocols with devices external to the electronic lock, such as the electronic key 2 or the gateway device 13. Such communication protocols can e.g. include any one or more of Bluetooth, Bluetooth Low Energy (BLE), Near-Field Communication (NFC), ZigBee, Wi-Fi (IEEE 802.11x), etc. Other untrusted software 26 can also be provided in the untrusted environment 67b. One or more parts of the communication software 25 and/or other untrusted software 26 can be provided using third-party libraries. The communication protocols can thereby be used to communicate with the electronic key 2 and/or the gateway device 13.

The untrusted software modules 25, 26 can also be verified against public keys stored in the secure data storage 22. In this way, only software modules that are authorised e.g. by the manufacturer of the electronic lock 12, can be installed on the electronic lock 12. In other words, there is the highest level of security for the trusted environment 67a, in which trusted software modules can access the secure data storage 22 and the lock hardware 68. The untrusted software modules 25, 26, while not being trusted to access the secure data storage 22 and the lock hardware 68, these modules are still verified against the public key to prevent an attacker from installing random (not validly signed) attack software on the electronic lock 12.

The lock-core software module 20 can communicate with a remote server 3 and/or the electronic key 2 via the untrusted communication software 25 without the communication software 25 being able to directly access the lock hardware 68 (via a driver in the trusted environment 67a of directly without an intermediate driver). The public key in the secure data storage 22 can be used by the lock-core software module 20 for verifying authority of the electronic key 2 or server 3 to provide a command, e.g. for unlocking the electronic lock 12 or for applying a configuration. The communication with the electronic key 2 can occur using local communication (such as Bluetooth, Bluetooth Low Energy (BLE) or NFC (Near-Field Communication)), whereby the electronic lock 21 can be configured to be off-line and mainly communicate locally with the electronic key 2. Alternatively or additionally, the communication with the server 3 can occur via the electronic key 2 or the gateway device 13, using a first link to/from the electronic lock 12 over local communication. In this case, the electronic key 2 or the gateway device 13 are transparent transport nodes. The communication link to the electronic key 2 or gateway device 13 can be based on a secure communication channel, which is authorised and encrypted between the electronic lock 12 and the electronic key 2 or gateway device 13, e.g. using Transport Layer Security (TLS).

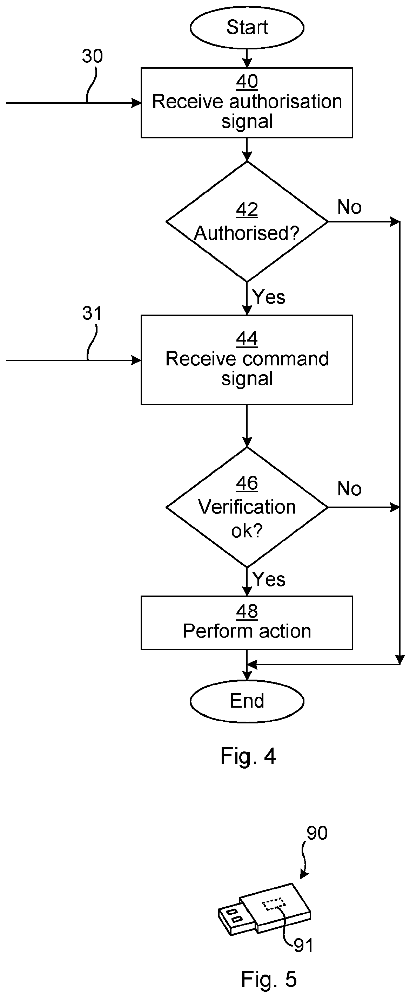

Fig 4 is a flow chart illustrating embodiments of methods for authenticating a command provided to an electronic lock controlling access to a restricted physical space 16. The method is performed by an electronic lock 12 (e.g. as shown in Fig 3 and described above). Optionally, the electronic lock comprises electronically controllable lock hardware 68, a trusted environment 67a comprising a secure data storage 22 and a lock-core software module 20. In that case, the electronic lock further comprises an untrusted environment 67b comprising untrusted software 25, 26 that is prevented from bypassing the lock-core software module 20 to control the electronically controllable lock hardware 68. Optionally, embodiments of the methods described below are performed in the trusted environment of the electronic lock 12.

In a *receive authorisation signal* step 40, the electronic lock 12 receives an authorisation signal 30 from a requesting entity. The requesting entity can be an electronic key 2 being in local communication with the electronic lock 12. Alternatively, requesting entity is the gateway device 13 or the server 3 that is located remotely from the electronic lock 12.The authorisation signal can contain a chain of delegations from the server 3 (alternatively from a lock owner, or the electronic lock 12 itself) to the requesting entity, where each delegation is a data item indicating the delegator and the delegatee, and the delegation is cryptographically signed by the delegator. In each delegation, each one of the delegator and the delegatee can be identified with its public key of a cryptographic key pair. The first delegation in the chain can have the server 3 (or the lock owner/ electronic lock 12) as the delegator and the last delegation in the chain would have the requesting entity as the delegatee. The authorisation signal comprises a public key (here denoted a second public key) for authentication of the requesting entity.

In a conditional *authorised* step 42, the electronic lock 12 evaluates whether the requesting entity is authorised to send a command (in a command signal) to the electronic lock 12 based on verifying a signature of the authorisation signal 30 against a first public key stored in the electronic lock 12. In other words, this evaluation can comprise verifying a signature of the authorisation signal 30 using the first public key, which can be stored in the electronic lock 12, e.g. in the secure data storage 22. The first public key can be a public key of the server 3 or other party that the electronic lock 12 trusts, indicated by the electronic lock 12 storing a public key for that party. Optionally, the evaluation comprises verifying that the requesting entity has a validly delegated access right to issue the command, such as an unlock command or configuration command, and send the command in a command signal to the electronic lock 12, according to the chain of delegations explained above. Optionally, the authorisation signal comprises validity times that are evaluated in this step.

If the requesting entity is determined to be authorised to send the command to the electronic lock 12, the method proceeds to a *receive command* step 44. Otherwise, the method ends.

In the *receive command signal* step 44, the electronic lock 12 receives a command signal 31. The command signal 31 is separate from the authorisation signal 30. This allows the authorisation signal 30 to be provided before or even in a separate path from the command signal 31.

Optionally, the command signal 31 comprises a parameter section and a signature of the parameter section, The parameter section can contain e.g. configuration parameters, such as new ownership of the electronic lock 12, new public keys of trusted parties to be stored in the electronic lock 12 or upgraded software/firmware for the electronic lock 12, etc.

In a conditional *verification ok* step 46, the electronic lock 12, evaluates whether the command signal 31 is valid. The validity of the command signal 31 is evaluated by verifying a signature of the command signal against a second public key. The second public key can e.g. be a public key of the requesting entity. According to the invention, (e.g. when the requesting entity is the electronic key 2 or the gateway device 13), the second public key (e.g. of the requesting entity) forms part of the authorisation signal 30, binding the command signal 31 cryptographically to the authorisation signal 30. In other words, the authorisation signal then comprises the second public key. In this case, the authorisation signal 30, which is signed, e.g. by the server 3, with a secret key that corresponds to the first public key (trusted by the electronic lock 12) stored in the electronic lock 12, also contains the second public key. This is useful when the requesting entity is not one that the electronic lock 12 stores a public key for in its secure data storage. Since the second public key is provided to the lock in the authorisation signal 30 that is signed by a trusted party (for which the electronic lock 12 stores the first public key), the electronic lock 12 can also trust the signature in accordance with the second public key (e.g. by the requesting entity) of the command signal 31, which can thus be verified using the second public key. This allows the requesting entity to generate the command signal 31 whenever appropriate, separately from the authorisation signal 30. Also, the requesting entity and the electronic lock 12 can both be offline during their (local) communication as long as they can communicate locally; there is no requirement for online access at that time.

When the command signal 31 comprises a parameter section, the verifying the validity of the command signal comprises verifying the parameter section against a third public key, being different than the second public key. The third public key can be stored in the electronic lock 12, whereby the third public key corresponds to a party that is trusted by the electronic lock 12. In this way, the requesting entity can provide a command signal with a parameter section to the electronic lock 12 where the parameter section can be trusted by the electronic lock 12 that it is generated by a trusted party, i.e. that the parameter section is not generated by the requesting entity. This prevents the requesting entity from generating, for instance, configuration parameters that could compromise security of the electronic lock 12, e.g. by installing public keys of attackers or changing the owner of the electronic lock 12 to an attacker. In other words, the requesting entity can in this way be trusted to provide the command of the command signal, but is not trusted with generating a parameter section of the command signal that is used in conjunction with applying the command.

If the command signal 31 (optionally including a parameter section) is valid, the method proceeds to a *perform action* step 48. Otherwise, the method ends. When a parameter section is included, both the command needs to be successfully verified against the second public key and the parameter section needs to be successfully verified against the third public key for the command to be considered to be valid. In other words, the parameter section is signed by a secret key corresponding to the third public key. In one embodiment, the whole command signal, including both the command and the parameter section is signed with a private key corresponding to the second public key. Alternatively, only a command section (comprising the command, where the command section is separate from the parameter section) of the command signal is signed by the private key corresponding to the second public key.

In the *perform action* step 48, the electronic lock 12 performs an action in accordance with the command 31. For instance, when the command is an unlock trigger command, the action is to unlock the electronic lock, in which case the electronic lock 12 controls the electronically controllable lock hardware 68 to be in an unlocked state, based on receiving the unlock trigger signal. For each such unlock, a new trigger unlock signal can be required.

When the command is a configuration command, the action is to apply a configuration to the electronic lock 12.

When the command is a software update command, the action is to install new software or firmware in the electronic lock 12, e.g. as trusted software 21.

Optionally, the electronic lock 12 maintains a log of all entities that have transmitted command signals to the electronic lock 12. Since the identity of the requesting entity can be verified based on the second public key, the identity of the requesting entity in the log is verified. Additionally, the electronic lock 12 can also optionally log any attempts of unauthorised attempts of providing command signals.

The authorisation signal may be received from the requesting entity.

When the requesting entity is the electronic key 2, the key is proven to be authorised, after which it sends the command signal. The electronic lock 12 can verify the delegation on its own given the information provided, whereby this embodiment provides offline capability both for the authentication and receiving commands.

When the requesting entity is the gateway device 13, the procedure for the electronic lock 12 is very similar, even if the source of the authorisation signal and the command signal may be from a remote entity such as the server. In this embodiment, the gateway device is authenticated in the same manner as the electronic key 2. This embodiment prevents an attacker from installing a rogue gateway device for transmitting fake command signals to the electronic lock 12.

When the requesting entity is the remote entity, located remotely from the electronic lock 12, the remote entity communicates both its authorisation signal and its command signal to the electronic lock 12. The communication from the remote entity to the electronic lock 12 can occur via the electronic key 2 and/or via gateway device that is located in the vicinity of the electronic lock 12. In this way, a remote authorisation and command transmission is achieved, where the intermediate nodes, such as the user device 2 and/or the gateway do not need to be trusted and only function as intermediate routing nodes to provide the authorisation signal and command signal to the electronic lock 12.

In one embodiment, the authorisation signal is received from a different entity than the requesting entity. For instance, the requesting entity can be the gateway device 13 relaying a signal from the remote entity, while the requesting entity can be the requesting key 2, or vice versa. Alternatively, the requesting entity can be a first remote entity, while the requesting entity can a second remote entity.

Fig 5 shows one example of a computer program product 90 comprising computer readable means. On this computer readable means, a computer program ₉₁ can be stored in a non-transitory memory. The computer program can cause a processor to execute a method according to embodiments described herein. In this example, the computer program product is in the form of a removable solid-state memory, e.g. a Universal Serial Bus (USB) drive. As explained above, the computer program product could also be embodied in a memory of a device, such as the computer program product 64 of Fig 2. While the computer program 91 is here schematically shown as a section of the removable solid-state memory, the computer program can be stored in any way which is suitable for the computer program product, such as another type of removable solid-state memory, or an optical disc, such as a CD (compact disc), a DVD (digital versatile disc) or a Blu-Ray disc.

The aspects of the present disclosure have mainly been described above with reference to a few embodiments. However, as is readily appreciated by a person skilled in the art, other embodiments than the ones disclosed above are equally possible within the scope of the invention, as defined by the appended patent claims. Thus, while various aspects and embodiments have been disclosed herein, other aspects and embodiments will be apparent to those skilled in the art. The various aspects and embodiments disclosed herein are for purposes of illustration and are not intended to be limiting, with the true scope indicated by the following claims.

## Claims

1. A method for authenticating a command provided to an electronic lock (12) controlling access to a restricted physical space (16), the method being performed by the electronic lock (12), the method comprising:
receiving (40) an authorisation signal (30) from a requesting entity;
determining (42) that the requesting entity is authorised to send a command to the electronic lock (12) based on verifying a signature of the authorisation signal (30) against a first public key stored in the electronic lock (12);
receiving (44) a command signal (31) comprising a command, the command signal (31) being separate from the authorisation signal (30);
verifying (46) validity of the command signal (31) based on verifying a signature of the command signal (31) against a second public key; and
performing (48) an action in accordance with the command (31);
**characterized in that** the authorisation signal comprises the second public key.

2. The method according to claim 1, wherein the command is an unlock trigger command, and wherein the action is to unlock the electronic lock (12).

3. The method according to claim 1 or 2, wherein the command is a configuration command, and wherein the action is to apply a configuration to the electronic lock (12).

4. The method according to any one of the preceding claims, wherein the command signal (31) comprises a parameter section and a signature of the parameter section, wherein the verifying (46) the validity of the command signal comprises verifying the parameter section against a third public key, being different than the second public key.

5. The method according to any one of the preceding claims, wherein the electronic lock (12) comprises electronically controllable lock hardware (68), a trusted environment (67a) comprising a secure data storage (22) and a lock-core software module (20), an untrusted environment (67b) comprising untrusted software (25, 26) that is prevented from bypassing the lock-core software module (20) to control the electronically controllable lock hardware (68), and wherein the method is performed in the trusted environment (67a).

6. The method according to any one of the preceding claims, wherein the second public key is a public key of the requesting entity.

7. The method according to any one of the preceding claims, wherein the determining (42) that the requesting entity is authorised comprises verifying that the requesting entity has a delegated access right to issue the command.

8. The method according to any one of the preceding claims, wherein the requesting entity is an electronic key (2) being in local communication with the electronic lock (12).

9. The method according to any one of claims 1 to 7, wherein the requesting entity is a gateway device (13) that enables communication between the electronic lock (12) and a server (3) that is located remotely from the electronic lock (12).

10. An electronic lock (12) for authenticating a command provided to an electronic lock (12) controlling access to a restricted physical space (16), the electronic lock (12) comprising:
a system-on-chip, SoC, (61) comprising a processor (60) and memory (64);
wherein the memory (64) comprises instructions that, when executed by the processor, cause the electronic lock (12) to:
receive an authorisation signal (30) from a requesting entity;
determine that the requesting entity is authorised to send a command to the electronic lock (12) based on the verifying a signature of the authorisation signal (30) against a first public key stored in the electronic lock (12);
receive a command signal (31) comprising a command, the command signal (31) being separate from the authorisation signal (30);
verify validity of the command signal (31) based on verifying a signature of the command signal (31) against a second public key; and
perform an action in accordance with the command (31);
**characterized in that** the authorisation signal comprises the second public key.

11. The electronic lock (12) according to claim 10, wherein the command is an unlock trigger command, and wherein the action is to unlock the electronic lock (12).

12. A computer program (67, 91) for authenticating a command provided to an electronic lock (12) controlling access to a restricted physical space (16), the computer program comprising computer program code which, when executed on an electronic lock (12), causes the electronic lock (12) to:
receive an authorisation signal (30) from a requesting entity;
determine that the requesting entity is authorised to send a command to the electronic lock (12) based on verifying a signature of the authorisation signal (30) against a first public key stored in the electronic lock (12);
receive a command signal (31) comprising a command, the command signal (31) being separate from the authorisation signal (30);
verify validity of the command signal (31) based on verifying a signature of the command signal (31) against a second public key; and
perform an action in accordance with the command (31);
**characterized in that** the authorisation signal comprises the second public key.

13. A computer program product (64, 90) comprising a computer program according to claim 12 and a computer readable means comprising non-transitory memory in which the computer program is stored.

## Patentansprüche

1. Verfahren zum Authentifizieren eines Befehls, der an ein elektronisches Schloss (12) bereitgestellt wird, das Zugang zu einem eingeschränkten physischen Raum (16) steuert, wobei das Verfahren von dem elektronischen Schloss (12) durchgeführt wird und das Verfahren Folgendes umfasst:
Empfangen (40) eines Autorisierungssignals (30) von einer anfordernden Entität;
Bestimmen (42), dass die anfordernde Entität befugt ist, einen Befehl an das elektronische Schloss (12) zu senden, basierend auf dem Überprüfen einer Signatur des Autorisierungssignals (30) anhand eines ersten öffentlichen Schlüssels, der in dem elektronischen Schloss (12) gespeichert ist;
Empfangen (44) eines Befehlssignals (31), das einen Befehl umfasst, wobei das Befehlssignal (31) von dem Autorisierungssignal (30) getrennt ist;
Überprüfen (46) der Gültigkeit des Befehlssignals (31) basierend auf dem Überprüfen einer Signatur des Befehlssignals (31) anhand eines zweiten öffentlichen Schlüssels; und
Durchführen (48) einer Handlung gemäß dem Befehl (31);
**dadurch gekennzeichnet, dass**
das Autorisierungssignal den zweiten öffentlichen Schlüssel umfasst.

2. Verfahren nach Anspruch 1, wobei der Befehl ein Entriegelungsauslösebefehl ist, und wobei die Handlung im Entriegeln des elektronischen Schlosses (12) besteht.

3. Verfahren nach Anspruch 1 oder 2, wobei der Befehl ein Konfigurationsbefehl ist und die Handlung darin besteht, eine Konfiguration auf das elektronische Schloss (12) anzuwenden.

4. Verfahren nach einem der vorstehenden Ansprüche, wobei das Befehlssignal (31) einen Parameterabschnitt und eine Signatur des Parameterabschnitts umfasst, wobei das Überprüfen (46) der Gültigkeit des Befehlssignals das Überprüfen des Parameterabschnitts anhand eines dritten öffentlichen Schlüssels, der sich von dem zweiten öffentlichen Schlüssel unterscheidet, umfasst.

5. Verfahren nach einem der vorstehenden Ansprüche, wobei das elektronische Schloss (12) eine elektronisch steuerbare Schloss-Hardware (68), eine vertrauenswürdige Umgebung (67a), die einen sicheren Datenspeicher (22) und ein Schloss-Kern-Softwaremodul (20), eine nicht vertrauenswürdige Umgebung (67b), die nicht vertrauenswürdige Software (25, 26) umfasst, die daran gehindert wird, das Schloss-Kern-Softwaremodul (20) zu umgehen, um die elektronisch steuerbare Schloss-Hardware (68) zu steuern, umfasst, und wobei das Verfahren in der vertrauenswürdigen Umgebung (67a) durchgeführt wird.

6. Verfahren nach einem der vorstehenden Ansprüche, wobei der zweite öffentliche Schlüssel ein öffentlicher Schlüssel der anfordernden Entität ist.

7. Verfahren nach einem der vorstehenden Ansprüche, wobei das Bestimmen (42), dass die anfordernde Entität befugt ist, das Überprüfen umfasst, ob die anfordernde Entität über ein delegiertes Zugriffsrecht zum herausgeben des Befehls verfügt.

8. Verfahren nach einem der vorstehenden Ansprüche, wobei die anfordernde Entität ein elektronischer Schlüssel (2) ist, der in lokaler Kommunikation mit dem elektronischen Schloss (12) steht.

9. Verfahren nach einem der Ansprüche 1 bis 7, wobei die anfordernde Entität eine Gateway-Vorrichtung (13) ist, die die Kommunikation zwischen dem elektronischen Schloss (12) und einem Server (3) ermöglicht, der von dem elektronischen Schloss (12) entfernt liegt.

10. Elektronisches Schloss (12) zum Authentifizieren eines Befehls, der an ein elektronisches Schloss (12) bereitgestellt wird, das den Zugang zu einem eingeschränkten physischen Raum (16) steuert, wobei das elektronische Schloss (12) Folgendes umfasst:
ein System-on-Chip, SoC, (61), das einen Prozessor (60) und einen Speicher (64) umfasst;
wobei der Speicher (64) Anweisungen umfasst, die, wenn sie vom Prozessor ausgeführt werden, das elektronische Schloss (12) zu Folgendem veranlassen:
Empfangen eines Autorisierungssignals (30) von einer anfordernden Entität;
Bestimmen, dass die anfordernde Entität befugt ist, einen Befehl an das elektronische Schloss (12) zu senden, basierend auf dem Überprüfen einer Signatur des Autorisierungssignals (30) anhand eines ersten öffentlichen Schlüssels, der in dem elektronischen Schloss (12) gespeichert ist;
Empfangen eines Befehlssignal (31), das einen Befehl umfasst, wobei das Befehlssignal (31) von dem Autorisierungssignal (30) getrennt ist;
Überprüfen der Gültigkeit des Befehlssignals (31) anhand einer Signatur des Befehlssignals (31) anhand eines zweiten öffentlichen Schlüssels; und
Durchführen einer Handlung gemäß dem Befehl (31);
**dadurch gekennzeichnet, dass**
das Autorisierungssignal den zweiten öffentlichen Schlüssel umfasst.

11. Elektronisches Schloss (12) nach Anspruch 10, wobei der Befehl ein Entriegelungsauslösebefehl ist, und die Handlung darin besteht, das elektronische Schloss (12) zu entriegeln.

12. Computerprogramm (67, 91) zum Authentifizieren eines Befehls, der an ein elektronisches Schloss (12) bereitgestellt wird, das den Zugang zu einem eingeschränkten physischen Raum (16) steuert, wobei das Computerprogramm einen Computerprogrammcode umfasst, der, wenn er auf einem elektronischen Schloss (12) ausgeführt wird, das elektronische Schloss (12) zu Folgendem veranlasst:
Empfangen eines Autorisierungssignals (30) von einer anfordernden Entität;
Bestimmen, dass die anfordernde Entität befugt ist, einen Befehl an das elektronische Schloss (12) zu senden, basierend auf dem Überprüfen einer Signatur des Autorisierungssignals (30) anhand eines ersten öffentlichen Schlüssels, der in dem elektronischen Schloss (12) gespeichert ist;
Empfangen eines Befehlssignal (31), das einen Befehl umfasst, wobei das Befehlssignal (31) von dem Autorisierungssignal (30) getrennt ist;
Überprüfen der Gültigkeit des Befehlssignals (31) anhand einer Signatur des Befehlssignals (31) anhand eines zweiten öffentlichen Schlüssels; und
Durchführen einer Handlung gemäß dem Befehl (31);
**dadurch gekennzeichnet, dass**
das Autorisierungssignal den zweiten öffentlichen Schlüssel umfasst.

13. Computerprogrammprodukt (64, 90), das ein Computerprogramm nach Anspruch 12 und ein computerlesbares Mittel umfasst, das einen nichtflüchtigen Speicher umfasst, in dem das Computerprogramm gespeichert ist.

## Revendications

1. Procédé d'authentification d'une commande fournie à une serrure électronique (12) commandant l'accès à un espace physique restreint (16), le procédé étant réalisé par la serrure électronique (12), le procédé comprenant :
la réception (40) d'un signal d'autorisation (30) à partir d'une entité requérante ;
la détermination (42) que l'entité requérante est autorisée à envoyer une commande à la serrure électronique (12) sur la base de la vérification d'une signature du signal d'autorisation (30) par rapport à une première clé publique stockée dans la serrure électronique (12) ;
la réception (44) d'un signal de commande (31) comprenant une commande, le signal de commande (31) étant séparé du signal d'autorisation (30) ;
la vérification (46) de la validité du signal de commande (31) sur la base de la vérification d'une signature du signal de commande (31) par rapport à une deuxième clé publique ; et
la réalisation (48) d'une action conformément à la commande (31) ;
**caractérisé en ce que**
le signal d'autorisation comprend la deuxième clé publique.

2. Procédé selon la revendication 1, dans lequel la commande est une commande de déclencheur de déverrouillage, et dans lequel l'action consiste à déverrouiller la serrure électronique (12).

3. Procédé selon la revendication 1 ou 2, dans lequel la commande est une commande de configuration, et dans lequel l'action consiste à appliquer une configuration à la serrure électronique (12).

4. Procédé selon l'une quelconque des revendications précédentes, dans lequel le signal de commande (31) comprend une section de paramètre et une signature de la section de paramètre, dans lequel la vérification (46) de la validité du signal de commande comprend la vérification de la section de paramètre par rapport à une troisième clé publique, étant différente de la deuxième clé publique.

5. Procédé selon l'une quelconque des revendications précédentes, dans lequel la serrure électronique (12) comprend du matériel de serrure à commande électronique (68), un environnement fiable (67a) comprenant un stockage de données sécurisé (22) et un module logiciel de noyau de serrure (20), un environnement non fiable (67b) comprenant un logiciel non fiable (25, 26) qui est empêché de contourner le module logiciel de noyau de serrure (20) pour commander le matériel de serrure à commande électronique (68), et dans lequel le procédé est réalisé dans l'environnement fiable (67a).

6. Procédé selon l'une quelconque des revendications précédentes, dans lequel la deuxième clé publique est une clé publique de l'entité requérante.

7. Procédé selon l'une quelconque des revendications précédentes, dans lequel la détermination (42) que l'entité requérante est autorisée comprend la vérification que l'entité requérante présente un droit d'accès délégué pour émettre la commande.

8. Procédé selon l'une quelconque des revendications précédentes, dans lequel l'entité requérante est une clé électronique (2) étant en communication locale avec la serrure électronique (12).

9. Procédé selon l'une quelconque des revendications 1 à 7, dans lequel l'entité requérante est un dispositif de passerelle (13) qui permet la communication entre la serrure électronique (12) et un serveur (3) qui est situé à distance de la serrure électronique (12).

10. Serrure électronique (12) pour authentifier une commande fournie à une serrure électronique (12) commandant l'accès à un espace physique restreint (16), la serrure électronique (12) comprenant :
un système sur puce, SoC, (61) comprenant un processeur (60) et de la mémoire (64) ;
dans lequel la mémoire (64) comprend des instructions qui, lorsqu'elles sont exécutées par le processeur, amènent la serrure électronique (12) à :
recevoir un signal d'autorisation (30) à partir d'une entité requérante ;
déterminer que l'entité requérante est autorisée à envoyer une commande à la serrure électronique (12) sur la base de la vérification d'une signature du signal d'autorisation (30) par rapport à une première clé publique stockée dans la serrure électronique (12) ;
recevoir un signal de commande (31) comprenant une commande, le signal de commande (31) étant séparé du signal d'autorisation (30) ;
vérifier la validité du signal de commande (31) sur la base de la vérification d'une signature du signal de commande (31) par rapport à une deuxième clé publique ; et
réaliser une action conformément à la commande (31) ;
**caractérisé en ce que**
le signal d'autorisation comprend la deuxième clé publique.

11. Serrure électronique (12) selon la revendication 10, dans lequel la commande est une commande de déclencheur de déverrouillage, et dans lequel l'action consiste à déverrouiller la serrure électronique (12).

12. Programme informatique (67, 91) pour authentifier une commande fournie à une serrure électronique (12) commandant l'accès à un espace physique restreint (16), le programme informatique comprenant du code informatique qui, lorsqu'il est exécuté sur une serrure électronique (12), amène la serrure électronique (12) à :
recevoir un signal d'autorisation (30) à partir d'une entité requérante ;
déterminer que l'entité requérante est autorisée à envoyer une commande à la serrure électronique (12) sur la base de la vérification d'une signature du signal d'autorisation (30) par rapport à une première clé publique stockée dans la serrure électronique (12) ;
recevoir un signal de commande (31) comprenant une commande, le signal de commande (31) étant séparé du signal d'autorisation (30) ;
vérifier la validité du signal de commande (31) sur la base de la vérification d'une signature du signal de commande (31) par rapport à une deuxième clé publique ; et
réaliser une action conformément à la commande (31) ;
**caractérisé en ce que**
le signal d'autorisation comprend la deuxième clé publique.

13. Produit de programme informatique (64, 90) comprenant un programme informatique selon la revendication 12 et un moyen lisible par ordinateur comprenant de la mémoire non transitoire dans laquelle le programme informatique est stocké.
